Europäisches Patentamt

European Patent Office

Office européen des brevets

(19)

(11) Numéro de publication : **0 250 345 B1**

## FASCICULE DE BREVET EUROPEEN

(12)

(45) Date de publication du fascicule du brevet :
13.03.91 Bulletin 91/11

(51) Int. Cl.⁵ : **F16J 15/10, C09K 3/10**

(21) Numéro de dépôt : 87420162.7

(22) Date de dépôt : 15.06.87

(54) **Contact thermique à fort coefficient de transfert et applications au refroidissement d'une structure soumise à un flux thermique intense.**

(30) Priorité : 16.06.86 FR 8608981
23.01.87 FR 8701213

(43) Date de publication de la demande :
23.12.87 Bulletin 87/52

(45) Mention de la délivrance du brevet :
13.03.91 Bulletin 91/11

(84) Etats contractants désignés :
AT BE CH DE ES FR GB IT LI LU NL SE

(56) Documents cités :
FR-A- 1 395 964
FR-A- 2 065 763
FR-A- 2 257 831
FR-A- 2 308 843
FR-A- 2 309 019
FR-A- 2 331 863

(73) Titulaire : LE CARBONE LORRAINE
Tour Manhattan - La Défense 2, 5-6, place de l'Iris,
F-92400 Courbevoie (FR)
Titulaire : URANIUM PECHINEY
Tour Manhattan, La Défense 2, 6, place de l'Iris,
F-92400 Courbevoie (FR)
Titulaire : FRAMATOME
Tour Fiat 1, Place de la Coupole
F-92400 Courbevoie (FR)

(72) Inventeur : **Coulon, Michel**
**"Les Cèdres" Les Hauts de St.Nicolas**
**F-95130 Le Plessis Bouchard (FR)**
Inventeur : **Faron, Robert**
**5, Avenue Victor Hugo**
**F-92400 Courbevoie (FR)**
Inventeur : **Besson, Daniel**
**3, rue Gabriel Chevallier**
**F-69009 Lyon (FR)**

(74) Mandataire : **Pascaud, Claude et al**
**PECHINEY 28, rue de Bonnel**
**F-69433 Lyon Cédex 3 (FR)**

**Description**

DOMAINE TECHNIQUE DE L'INVENTION

La présente invention concerne un contact thermique à fort coefficient de transfert entre deux matériaux pouvant avoir des coefficients de dilatation différents, et son application au refroidissement d'une structure soumise à un flux thermique intense.

Les matériaux concernés sont choisis parmi les matériaux carbonés, les céramiques et les métaux ou alliages métalliques. Par matériaux carbonés, on entend essentiellement les carbones et les graphites industriels, les composites carbone-carbone.

ETAT DE LA TECHNIQUE

D'une manière générale, il est connu que de tels matériaux, notamment s'ils ont des coefficients de dilatation différents, peuvent difficilement être assemblés avec un bon contact thermique, ce qui est dommageable pour de nombreuses applications.

Ainsi par exemple, dans les dispositifs où l'on a besoin de refroidir un élément en matériau carboné par une circulation d'eau, la fragilité et la porosité du matériau carboné empêche en général le refroidissement direct et on est amené à fixer l'élément en matériau carboné à un élément métallique. Se posent alors les problèmes de la fixation mécanique et du contact thermique.

Il existe de nombreux cas où l'on est amené à refroidir une structure soumise à un flux thermique intense, ce flux thermique pouvant être d'origine externe ou interne par rapport à la structure, qui peut être métallique ou constituée d'un matériau carboné ou céramique. Le flux thermique, selon les cas, peut être continu, discontinu ou impulsionnel.

On peut citer notamment, des réacteurs chimiques, des dispositifs de combustion, de coulée continue de métaux fondus, des réacteurs nucléaires à fission ou à fusion, des cibles soumises à des flux intenses de rayonnements (X, lasers, etc), ou de particules, qui peuvent être continus ou impulsionnels. La solution classique consiste à disposer dans la structure à refroidir, des ensembles de tubes dans lesquels circule un fluide de refroidissement.

Le problème qui se pose est d'assurer un très bon contact thermique entre les canaux ménagés dans le matériau constituant la structure et la paroi externe des tubes métalliques de refroidissement, compte tenu des irrégularités des surfaces en regard et surtout des dilatations différentielles entre les tubes et la structure à refroidir, au cours des cycles thermiques auxquels elle est soumise, et qui sont souvent très brutaux (par exemple dans les réacteurs thermonucléaires à fusion).

Pour avoir un contact thermique acceptable, on doit exercer entre les composants des pressions de serrage supérieures à 100kPa. Dans les meilleurs cas, on obtient des coefficients de transfert de l'ordre de $9 \times 10^3$ W.m$^{-2}$.K$^1$. Des coefficients de transfert sont très sensibles aux états de surface des éléments et peu reproductibles, ce qui est évidemment très gênant.

Une façon de résoudre ce problème est le brasage. Cette solution, très efficace avec certains matériaux, est chère et impose une température d'utilisation inférieure à la température de fusion de la brasure. De plus, pour les matériaux ayant des coefficients de dilatation très différents, il est possible, dans certains cas, de les braser en intercalant une feuille métallique qui accomode les contraintes. Il est alors nécessaire d'avoir recours à des métaux chers et délicats à mettre en oeuvre tels que molybdène, zirconium, etc.... Enfin, les céramiques telles que carbure et nitrure de silicium sont extrêmement difficiles à braser surtout si elles sont frittées à une densité voisine de la densité théorique.

Le but principal de l'invention est de disposer d'un contact thermique plus simple à mettre en oeuvre, plus économique et pouvant être utilisé à haute température (supérieure à 2000°C si les matériaux à assembler le permettent).

OBJET DE L'INVENTION

Un premier objet de l'invention est un contact thermique à fort coefficient de transfert au moins égal à $10^4$ W.m$^{-2}$.K$^{-1}$ entre deux matériaux pouvant avoir des coefficients de dilatation différents, caractérisé en ce qu'il est constitué par du graphite expansé recomprimé, inséré entre lesdits matériaux et en ce que la pression entre lesdits matériaux est maintenue égale au moins à 10 kPa.

Le graphite expansé recomprimé est connu pour présenter, comme indiqué dans le brevet français n° 1 395 964 une forte anisotropie, notamment une conductivité thermique très élevée dans le plan de la couche de graphite expansé (direction "a"), une conductivité thermique très faible dans une direction perpendiculaire à la couche de graphite expansé (direction "c"). Or, le transfert thermique selon l'invention se faisant d'un matériau à l'autre, perpendiculairement à la couche de graphite expansé interposé entre les deux matériaux (sens "c"), il a été constaté de manière surprenante qu'un transfert thermique élevé pouvait être obtenu dans le sens "c" du graphite expansé, pourtant de faible conductivité thermique, en maintenant une pression entre les deux matériaux.

Les matériaux à relier thermiquement sont choisis parmi :
– les matériaux carbonés : carbones et graphites artificiels tels que carbone vitreux, graphites polycristallins, etc..., les composites carbone-carbone.
– les céramiques telles que carbure de silicium, nitrure de silicium, carbure de bore, carbure de tantale.
– les métaux et alliages métalliques.

Selon l'invention, le contact thermique peut être, par exemple, inséré entre deux matériaux carbonés différents, un matériau carboné et un métal, une céramique et un métal.

Un second objet de l'invention est un dispositif de refroidissement d'une structure soumise à un flux thermique intense, continu, discontinu ou impulsionnel, au moyen de tubes à circulation de fluide, disposés dans des canaux (2) ménagés dans ladite structure (1), caractérisé en ce que l'on interpose entre la structure à refroidir et chaque tube (3) un matériau souple, bon conducteur de la chaleur à l'état comprimé (4) éventuellement chargé d'une poudre métallique ou carbonée de manière à ce que, la pression entre le matériau de ladite structure et le matériau dudit tube étant au moins égale à 10 kPa, le contact thermique entre les matériaux dudit tube et de ladite structure ait un coefficient de transfert au moins égal à $10^4$ $W.m^{-2}.K^{-1}$. Ce matériau souple est avantageusement constitué par du graphite expansé, plus ou moins recomprimé ou laminé.

Il peut être également constitué par d'autres formes de produits carbonés souples,tels que tissus ou feutres en fibres de carbone ou de graphite éventuellement chargé de poudre métallique, produits carbonés qui présentent comme le graphite expansé, une conductivité thermique anisotrope et sont utilisables dans les mêmes conditions que ce dernier.

Un troisième objet de la même invention est un procédé de refroissement d'une structure soumise à un flux thermique intense, continu, discontinu ou impulsionnel, au moyen de tubes (3) à circulation de fluide, disposés dans des canaux (2) ménagés dans ladite structure, caractérisé en ce que l'on entoure préalablement chaque tube (3) d'une couche de matériau souple tel que défini précédemment, puis l'on insère chaque tube dans les canaux, et on soumet les tubes à une expansion sous pression de façon à assurer la compression du matériau souple entre le tube et les canaux à un niveau au moins égal à 10 kPa et à obtenir ainsi un contact thermique entre les matériaux dudit tube et de ladite structure ayant un coefficient de transfert au moins égal à $10^4$ $W.m^{-2}.K^{-1}$.

Un quatrième objet de la même invention est un procédé de refroidissement d'une structure soumise à un flux thermique intense, continu ou impulsionnel, au moyen de tubes à circulation de fluide, cette structure étant constituée d'une pluralité d'éléments discrets (8), caractérisé en ce que l'on forme, dans chaque élément de la structure, au moins un canal semi-circulaire (9), on dispose chaque élément sur au moins un tube de refroidissement (3), en interposant une couche de matériaux souple tel que défini précédemment et on solidarise les éléments et les tubes, de façon à appliquer, sur le matériau souple, un niveau de compression au moins égal à 10 kPa et à obtenir ainsi un contact thermique à coefficient de transfert au moins égal à $10^4$ $W.m^{-2}.K^{-1}$ entre les matériaux de ladite structure et dudit tube.

Enfin, un dernier objet de l'invention est l'application au refroidissement de la première paroi d'un réacteur thermonucléaire à fusion, notamment du type "TOKAMAK".

## MISE EN OEUVRE DE L'INVENTION

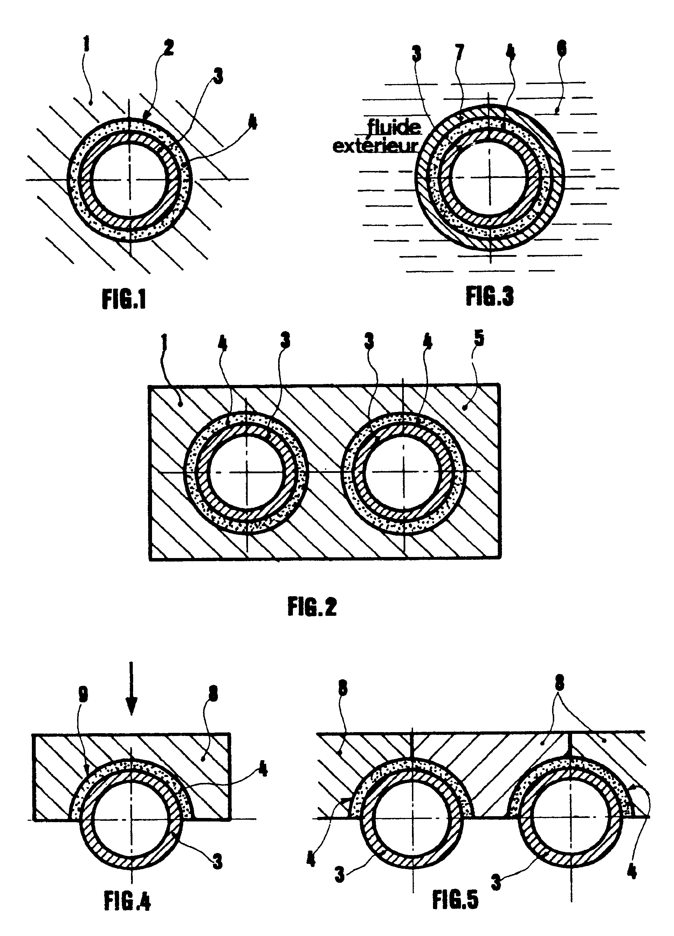

Les exemples 1 et 2 et les figures 1 à 5 illustrent, de façon non limitative la mise en oeuvre de l'invention.

Pour la bonne compréhension de l'invention, on rappelle que le graphite expansé est obtenu par chauffage brutal de graphite lamellaire, à une température pouvant atteindre 1000°C, donnant ainsi un graphite exfolié dont la densité est de l'ordre de 0,002. Ce graphite peut être ensuite plus ou moins recomprimé en blocs de densité allant de 0,02 à 2 ou laminé en feuilles de 0,1 à 2 mm d'épaisseur, de densité de l'ordre de 1. Le graphite expansé recomprimé possède une excellente conductivité thermique dans le plan de compression et une conductibilité thermique beaucoup moins bonne dans la direction perpendiculaire. Mais, il possède aussi une bonne souplesse et une bonne élasticité. De ce fait, il permet de garder un contact conductif même pour de fortes déformations thermiques des matériaux.

Ce produit est vendu par la société "LE CARBONE LORRAINE" sous la marque "PAPYEX". Il existe sous différentes nuances qui diffèrent notamment par leur coefficient de dilatation, qui se situe entre environ 4 et $6.10^{-6}$ $K^{-1}$. Ce graphite expansé peut aussi comporter une charge telle qu'une poudre métallique, qui améliore sa conductivité thermique.

Différents essais montrent que le coefficient de transfert thermique entre deux surfaces de matériaux pouvant avoir des coefficients de dilatation différents est toujours amélioré lorsque l'on insère du graphite expansé comprimé entre lesdites surfaces. Ce gain dépend de la température, de la pression de serrage des matériaux, de leur état de surface et de leur nature.

Le graphite expansé peut, suivant l'invention, être inséré comprimé sous forme de feuille laminée ou comprimée. Il peut également être inséré non comprimé et être comprimé in situ lors de la mise en place des matériaux. Cette dernière variante est avantageusement utilisée lorsque les surfaces des matériaux ne sont pas planes et/ou très rugueuses. Dans tout ce qui suit, nous conviendrons de désigner par "graphite expansé", de façon générale, le graphite exfolié, plus ou moins recomprimé ou laminé.

## Exemple 1

Un disque cylindrique en graphite de diamètre 50 mm est appliqué sur une surface métallique par appui central. Le graphite (nuance 1346 de la Société "LE CARBONE-LORRAINE") a un coefficient de dilatation de $5,5$ à $6 \times 10^{-6}.K^{-1}$.

Le métal est de l'inox 316L qui a un coefficient de dilatation de $16 \times 10^{-6}.K^{-1}$.

Des essais comparatifs sont réalisés à différentes pressions d'application avec la même puissance transmise égale à 75 watts, en utilisant ou non un contact thermique constitué par une feuille de graphite expansé, comprimé, de densité 1 et d'épaisseur 0,2 mm. Les résultats sont regroupés dans le tableau 1 ci-après.

Tableau 1

| Pression en kPa | 10 | 80 | 120 |
|---|---|---|---|
| A en $W.m^{-2}K^{-1}$ | $1,7 \times 10^3$ | $1,4 \times 10^3$ | $2,2 \times 10^3$ |
| B en $W.m^{-2}K^{-1}$ | $2,7 \times 10^4$ | $3,4 \times 10^4$ | $3,6 \times 10^4$ |

A : Coefficient de transfert thermique sans contact thermique graphite expansé.
B : Coefficient de transfert thermique avec contact thermique selon l'invention.

## Exemple 2

L'exemple 2 est identique à l'exemple 1, à la différence près que le graphite expansé est remplacé par un autre graphite (nuance 5890 de la demanderesse) ayant un coefficient de dilatation de $4,5.10^{-6}.K^{-1}$. Le tableau 2 ci-après regroupe de manière semblable le résultat des essais faits dans les mêmes conditions que celles de l'exemple 1.

Tableau 2

| Pression en kPa | 10 | 80 | 120 |
|---|---|---|---|
| A' en W.m$^{-2}$.K$^{-1}$ | $5 \times 10^3$ | $6 \times 10^3$ | $9 \times 10^3$ |
| B' en W.m$^{-2}$.K$^{-1}$ | $10^4$ | $2 \times 10^4$ | $3 \times 10^4$ |

A' : Coefficient de transfert thermique sans contact thermique en graphite expansé

B' : Coefficient de transfert thermique avec contact thermique selon l'invention

D'après ces essais, on constate que les coefficients de transfert thermique avec un contact suivant l'invention sont de l'ordre ou supérieurs à $10^4$ W.m$^{-2}$.K$^{-1}$. Avec d'autres couples de matériaux et/ou des conditions différentes, ils atteignent des valeurs de $6 \times 10^4$ W.m$^{-2}$.K$^{-1}$.

DESCRIPTION DES FIGURES

Les figures 1 à 5 illustrent l'application de l'invention au refroidissement d'une structure soumise à un flux thermique intense, continu, discontinu ou impulsionnel.

Pour la clarté des dessins, on a fortement exagéré l'épaisseur des parois des tubes métalliques et de couches de matériau souple.

Sur la figure 1, la structure 1 à refroidir comporte une pluralité de canaux tels que 2 dans lesquels sont insérés des tubes métalliques tels que 3, qui permettent la circulation d'un fluide de refroidissement (liquide ou gazeux). Le contact thermique entre la structure 1 (qui est, par exemple, un bloc de graphite), et le tube métallique 3 est assuré par l'intermédiaire d'une couche mince 4 de matériau souple bon conducteur tel que du graphite expansé, plus ou moins recomprimé ou laminé. pour le montage, on prévoit un jeu suffisant entre le tube métallique 3 et la canal 2, et on entoure le tube d'une couche 4 de graphite expansé. Le montage étant effectué, on soumet le tube métallique à une expansion par exemple par mise sous pression hydraulique, ce qui provoque la compression de la couche 4 de graphite expansé et réduit son épaisseur à une valeur qui peut être comprise entre 0,1 et 2 mm par exemple.

La pression à laquelle est soumise la bande 4 doit être au moins égale à 10 kPa, de façon à assurer un coefficient de transfert thermique au moins égal à $10^4$ W.m$^{-2}$K$^{-1}$.

Sur la figure 2, on a représente en coupe transversale un élément de structure 5 en graphite, de forme parallélépipédique, comportant deux tubes de refroidissement 3 dont le contact thermique avec le bloc de graphite 5 est assuré par interposition d'une couche de graphite expansé 4, dont l'épaisseur a été réduite d'environ 10% du fait de l'expansion des tubes 2 après mise en place.

La figure 3 montre une variante de réalisation dans laquelle le flux thermique est apporté par un fluide extérieur 6, qui est contenu par une première paroi 7, qui est de préférence métallique pour en garantir l'étanchéité; le contact thermique entre cette paroi 7 et le tube de refroidissement 3 est assuré, de la même façon, par interposition d'une feuille de graphite expansé 4, comprimé après montage par expansion du tube 3, la feuille de graphite expansé ainsi comprimé ayant une épaisseur finale de l'ordre de 0,2 mm.

Les figures 4 et 5 représentent une variante de mise en oeuvre de l'invention selon laquelle la structure à refroidir est mise en place sur le faisceau de tubes après interposition de la couche de matériau souple.

Dans le cas représente, la structure à refroidir est constituée par un ensemble d'éléments discrets tels que les briques 8 en matériau carboné (graphite, ou composite carbone-carbone), dans lesquelles on a préformé ou usiné des canaux semi-circulaires que l'on applique sur les tubes 3 avec interposition du matériau souple 4. La mise en compression du matériau souple 4 s'effectue par le moyen de mise en place et d'immobilisation des briques 8, qui peut être de tout type connu (étriers, tiges filetées, etc...).

Une telle structure peut, par exemple, constituer la première paroi d'un réacteur thermonucléaire à fusion du type torique, qui est soumise directement au flux thermique engendré par les réactions thermonucléaires.

L'utilisation de graphite expansé comprimé pour constituer l'élément souple 4 présente en outre l'avantage d'assurer, du fait de sa structure anisotrope, un étalement du flux thermique dans la direction perpendiculaire au sens de sa transmission. De cette façon, un pic thermique local ("point chaud") sur la face externe de la structure à refroidir est étalé sur une zone périphérique étendue du tube de refroidissement, en raison de la conductivité élevée du graphite expansé comprimé dans le sens parallèle aux feuillets de graphite, c'est-à-dire dans le sens perpendiculaire à la compression et au flux thermique.

Pour la mise en oeuvre de l'invention, on peut utiliser d'autres formes de matériaux carbonés souples ayant des propriétés thermiques comparables tels que tissus ou feutres en fibres de carbone ou de graphite, chargés, éventuellement, de poudre métallique pour en améliorer la conductivité thermique. Compte tenu de leur structure fibreuse, ces matériaux ont aussi une conductivité thermique fortement anisotrope.

L'invention trouve son application chaque fois que des flux thermiques intenses, continus, discontinus ou impulsionnels, doivent être évacués par des moyens de refroidissement à circulation de fluides, et notamment dans les réacteurs nucléaires à fusion ou à fission (tuiles de protection, limiteurs et diverteurs), la coulée continue de métaux, les cibles soumises à des flux intenses de rayonnements ou de particules qui peuvent se situer à des niveaux, par exemple de une à plusieurs centaines de watts par centimètre carré.

## Revendications

1. Contact thermique à fort coefficient de transfert au moins égal à $10^4$ W.m$^{-2}$.K$^{-1}$ entre deux matériaux pouvant avoir des coefficients de dilatations différents caractérisé en ce qu'il est constitué par du graphite expansé inséré entre lesdits matériaux et en ce que la pression entre lesdits matériaux est maintenue égale au moins à 10 kPa.

2. Contact thermique selon la revendication 1 caractérisé en ce que les deux matériaux sont choisis parmi les matériaux carbonés, les céramiques et les métaux ou alliages métalliques.

3. Contact thermique selon la revendication 2 caractérisé en ce que les deux matériaux sont tous deux des matériaux carbonés.

4. Contact thermique selon la revendication 2 caractérisé en ce que les deux matériaux sont un matériau carboné et un métal ou un alliage métallique.

5. Contact thermique selon la revendication 2 caractérisé en ce que les deux matériaux sont une céramique et un métal ou un alliage métallique.

6. Contact thermique selon l'une quelconque des revendications 1 à 5 caractérisé en ce que le graphite expansé est inséré sous forme de feuilles laminées ou comprimées.

7. Contact thermique selon l'une quelconque des revendications 1 à 5 caractérisé en ce que le graphite expansé est comprimé in situ.

8. Contact thermique selon l'une quelconque des revendications 1 à 7 caractérisé en ce que le graphite expansé contient une charge.

9. Contact thermique selon la revendication 8 caractérisé en ce que la charge est un métal.

10. Dispositif de refroidissement d'une structure soumise à un flux thermique intense, continu, discontinu ou impulsionnel, au moyen de tubes à circulation de fluide disposés dans des canaux (2) ménagés dans ladite structure, caractérisé en ce que un matériau souple à base de carbone (4), bon conducteur de la chaleur, à l'état comprimé, est interposé entre la structure (1) à refroidir et chaque tube (3), la pression entre la structure (1) et chaque tube (3) étant au moins égale à 10 kPa de manière à obtenir un contact thermique à coefficient de transfert au moins égal à $10^4$ W.m$^{-2}$.K$^{-1}$.

11. Dispositif selon revendication 10 caractérisé en ce que chaque canal de la structure à refroidir est constitué par un tube métallique (7), disposé concentriquement à l'extérieur du tube de refroidissement (3) dont il est séparé par une couche de matériau à base de carbone souple (4), bon conducteur de la chaleur, à l'état comprimé.

12. Dispositif selon revendication 10 ou 11 caractérisé en ce que le matériau souple à base de carbone (4) est constitué par du graphite expansé.

13. Dispositif selon revendication 10 ou 11 caractérisé en ce que le matériau souple à base de carbone (4) est constitué par du graphite expansé chargé avec une poudre métallique.

14. Dispositif selon revendication 10 ou 11 caractérisé en ce que le matériau souple à base de carbone (4) est constitué par un matériau carboné fibreux choisi parmi les tissus et feutres en fibres de carbone ou de graphite, chargés ou non de poudre métallique.

15. Procédé de refroidissement d'une structure soumise à un flux thermique intense, continu, discontinu ou impulsionnel, au moyen de tubes (3) à circulation de fluide, disposés dans des canaux (2) ménagés dans ladite structure caractérisé en ce que l'on entoure préalablement chaque tube (3) dune couche de matériau souple à base de carbone (4), puis l'on insère chaque tube dans les canaux (2), et on soumet les tubes (3) à une expansion sous pression de façon à assurer la compression du matériau souple entre le tube (3) et les canaux (2) à un niveau au moins égal à 10 kPa et de manière à obtenir un contact thermique à coefficient de

EP 0 250 345 B1

transfert au moins égal à $10^4$ W.m$^{-2}$.K$^{-1}$.

16. Procédé de refroidissement d'une structure soumise à un flux thermique intense, continu, discontinu ou impulsionnel, au moyen de tubes à circulation de fluide, cette structure étant constituée dune pluralité d'éléments discrets (8), <u>caractérisé en ce que</u> l'on forme, dans chaque élément de la structure au moins un canal semi-circulaire (9), on dispose chaque élément sur au moins un tube de refroidissement (2), en interposant une couche de matériau souple à base de carbone (4), et on solidarise les éléments (8) et les tubes (3) de façon à appliquer sur le matériau souple, un niveau de compression au moins égal à 10 kPa et de manière à obtenir un contact thermique à coefficient de transfert au moins égal à $10^4$ W.m$^{-2}$K$^{-1}$.

17. Procédé selon la revendication 15 ou 16, caractérisé en ce que le matériau souple à base de carbone (4) est du graphite expansé.

18. Procédé selon revendication 15 ou 16, caractérisé en ce que le matériau souple à base de carbone (4) est du graphite expansé, chargé avec une poudre métallique.

19. Procédé selon revendication 15 ou 16, caractérisé en ce que le matériau souple à base de carbone (4) est constitué par un matériau carboné fibreux choisi parmi les tissus et feutres en fibres de carbone ou de graphite, chargés ou non de poudre métallique.

20. Application du dispositif et du procédé selon l'une quelconque des revendications 10 à 19, au refroidissement de la première paroi d'un réacteur thermonucléaire à fusion, par exemple du type torique.

## Ansprüche

1. Thermokontakt mit hoher Wärmeübergangszahl, die mindestens gleich $10^4$ W·m$^{-2}$·K$^{-1}$ ist, zwischen zwei Stoffen, die verschiedene Ausdehnungskoeffizienten haben können, dadurch gekennzeichnet, daß er aus expandiertem Graphit aufgebaut ist, der zwischen diesen Stoffen eingefügt ist, und daß der Druck zwischen diesen Stoffen mindestens auf 10 kPa gehalten wird.

2. Thermokontakt nach Anspruch 1, dadurch gekennzeichnet, daß die zwei Stoffe unter den kohlenstoffhaltigen Stoffen, den keramischen Stoffen und den Metallen oder Metalllegierungen ausgewählt werden.

3. Thermokontakt nach Anspruch 2, dadurch gekennzeichnet, daß die zwei Stoffe alle beide kohlenstoffhaltige Stoffe sind.

4. Thermokontakt nach Anspruch 2, dadurch gekennzeichnet, daß die zwei Stoffe ein kohlenstoffhaltiger Stoff und ein Metall oder eine Metalllegierung sind.

5. Thermokontakt nach Anspruch 2, dadurch gekennzeichnet, daß die zwei Stoffe eine Keramik und ein Metall oder eine Metalllegierung sind.

6. Thermokontakt nach einem der Ansprüche 1 bis 5, dadurch gekennzeichnet, daß der expandierte Graphit in Form von laminierten oder komprimierten Blättern eingefügt ist.

7. Thermokontakt nach einem der Ansprüche 1 bis 5, dadurch gekennzeichnet, daß der expandierte Graphit in situ komprimiert wird.

8. Thermokontakt nach einem der Ansprüche 1 bis 7, dadurch gekennzeichnet, daß der expandierte Graphit einen Füllstoff enthält.

9. Thermokontakt nach Anspruch 8, dadurch gekennzeichnet, daß der Füllstoff ein Metall ist.

10. Vorrichtung zum Kühlen einer Struktur, die einem intensiven, kontinuierlichen, diskontinuierlichen oder stoßweisen Wärmefluß ausgesetzt ist, mittels Röhren zur Zirkulation eines Fluids, die in Kanälen (2), die in diese Struktur eingebettet sind, angeordnet sind, dadurch gekennzeichnet, daß ein flexibler Stoff auf Kohlenstoffbasis (4), einem guten Wärmeleiter, in komprimiertem Zustand zwischen die zu kühlende Struktur (I) und jede Röhre (3) eingefügt ist, wobei der Druck zwischen der Struktur (1) und jeder Röhre (3) mindestens gleich 10 kPa ist, um einen Thermokontakt mit einer Wärmeübergangszahl von mindestens gleich $10^4$ W·m$^{-2}$·K$^{-1}$ zu erhalten.

11. Vorrichtung nach Anspruch 10, dadurch gekennzeichnet, daß jeder Kanal der zu kühlenden Struktur aus einer metallischen Röhre (7) besteht, die konzentrisch außerhalb der Kühlröhre (3) angebracht ist, von der sie durch einen Belag aus flexiblem Stoff auf Kohlenstoffbasis (4), einem guten Wärmeleiter, in komprimiertem Zustand, getrennt ist.

12. Vorrichtung nach Anspruch 10 oder 11, dadurch gekennzeichnet, daß der flexible Stoff auf Kohlenstoffbasis (4) aus expandiertem Graphit aufgebaut ist.

13. Vorrichtung nach Anspruch 10 oder 11, dadurch gekennzeichnet, daß der flexible Stoff auf Kohlenstoffbasis (4) aus expandiertem, mit einem metallischen Pulver gefüllten Graphit aufgebaut ist.

14. Vorrichtung nach Anspruch 10 oder 11, dadurch gekennzeichnet, daß der flexible Stoff auf Kohlenstoffbasis (4) aus einem faserigen kohlenstoffhaltigen Stoff aufgebaut ist, der unter den Geweben und Filzen aus Kohlenstoff- oder Graphitfasern, die mit metallischen Pulvern gefüllt sein können oder nicht, ausgewählt ist.

7

15. Verfahren zur Kühlung einer Struktur, die einem intensiven, kontinuierlichen, diskontinuierlichen oder stoßweisen Wärmefluß ausgesetzt ist, mittels Röhren (3) zur Zirkulation eines Fluids, die in Kanälen (2), die in diese Struktur eingebettet sind, angeordnet sind, dadurch gekennzeichnet, daß zuvor jede Röhre (3) mit einem Belag aus flexiblem Stoff auf Kohlenstoffbasis (4) umhüllt wird, danach jede Röhre in die Kanäle (2) eingefügt wird, und daß die Röhren (3) einer Ausdehnung unter Druck unterzogen werden, um sicherzustellen, daß der Druck des flexiblen Stoffs zwischen der Röhre (3) und den Kanälen (2) eine Höhe von mindestens gleich 10 kPa besitzt, und um einen Thermokontakt mit einer Wärmeübergangszahl von mindestens gleich $10^4$ $W \cdot m^{-2} \cdot K^{-1}$ zu erhalten.

16. Verfahren zur Kühlung einer Struktur, die einem intensiven, kontinuierlichen, diskontinuierlichen oder stoßweisen Wärmefluß ausgesetzt ist, mittels Röhren zur Zirkulation eines Fluids, wobei diese Struktur aus einer Vielzahl von diskreten Elementen (8) aufgebaut ist, dadurch gekennzeichnet, daß in jedem Element der Struktur mindestens ein halbkreisförmiger Kanal (9) ausgebildet wird, jedes Element auf mindestens einer Kühlröhre (2) durch Einfügung eines Belags aus flexiblem Stoff auf Kohlenstoffbasis (4) angeordnet wird, und die Elemente (8) und die Röhren (3) so verbunden werden, um auf das flexible Material einen Druckwert von mindestens gleich 10 kPa anzulegen und um einen Thermokontakt mit einer Wärmeübergangszahl von mindestens gleich $10^4$ $W \cdot m^{-2} \cdot K^{-1}$ zu erhalten.

17. Verfahren nach Anspruch 15 oder 16, dadurch gekennzeichnet, daß der flexible Stoff auf Kohlenstoffbasis (4) expandierter Graphit ist.

18. Verfahren nach Anspruch 15 oder 16, dadurch gekennzeichnet, daß der flexible Stoff auf Kohlenstoffbasis (4) expandierter, mit einem metallischen Pulver gefüllter Graphit ist.

19. Verfahren nach Anspruch 15 oder 16, dadurch gekennzeichnet, daß der flexible Stoff auf Kohlenstoffbasis (4) aus einem faserigen kohlenstoffhaltigen Stoff aufgebaut ist, der unter den Geweben und Filzen aus Kohlenstoff- oder Graphitfasern, die mit metallischem Pulver gefüllt sein können oder nicht, ausgewählt wird.

20. Anwendung der Vorrichtung und des Verfahrens nach einem der Ansprüche 10 bis 19 zur Kühlung der ersten Wand eines thermonuklearen Fusionsreaktors, z.B. vom Torustyp.


## Claims

1. A thermal contact with a high transfer coefficient which is at least equal to $10^4$ $W.m^{-2}.K^{-1}$ between two materials rich may different coefficients of expansion characterised in that it is formed by expanded graphite inserted between said materials and that the pressure between said materials is kept equal at least to 10 kPa.

2. Thermal contact according to claim 1 characterised in that the two materials are selected from carbonaceous materials, ceramics and metals or metal alloys.

3. Thermal contact according to claim 2 characterised in that the two materials are both carbonaceous materials.

4. Thermal contact according to claim 2 characterised in that the two materials are a carbonaceous material and a metal or a metal alloy.

5. Thermal contact according to claim 2 characterised in that the two materials are a ceramic and a metal or a metal alloy.

6. Thermal contact according to any one of claims 1 to 5 characterised in that the expanded graphite is inserted in the form of rolled or compressed sheets.

7. Thermal contact according to any one of claims 1 to 5 characterised in that the expanded graphite is compressed in situ.

8. Thermal contact according to any one of claims 1 to 7 characterised in that the expanded graphite contains a filler.

9. Thermal contact according to claim 8 characterised in that the filler is a metal.

10. Apparatus for cooling a structure which is subjected to an intense heat flux in continuous, discontinuous or pulse form, by means of fluid circulation tubes disposed in passages (2) provided in said structure, characterised in that a flexible carbon-base material (4) which is a good conductor of heat in the compressed state is interposed between the structure (1) to be cooled and each tube (3), the pressure between the structure (1) and each tube (3) being at least equal to 10 kpa so as to provide a thermal contact with a transfer coefficient of at least equal to $10^4$ $W.m^{-2}.K^{-1}$.

11. Apparatus according to claim 10 characterised in that each passage of the structure to be cooled is formed by a metal tube (7) disposed concentrically to the exterior of the cooling tube (3) from which it is separated by a layer of flexible carbon-base material (4) which is a good conductor of heat in the compressed state.

12. Apparatus according to claim 10 or claim 11 characterised in that the flexible carbon-base material (4) is formed by expanded graphite.

13. Apparatus according to claim 10 or claim 11 characterised in that the flexible carbon -base material (4) is formed by expanded graphite which is filled with a metal powder.

14. Apparatus according to claim 10 or claim 11 characterised in that the flexible carbon-base material (4) is formed by a fibrous carbonaceous material selected from cloths and felts of carbon or graphite fibres, with or without a metal powder filler.

15. A process for cooling a structure which is subjected to an intense heat flux in continuous, discontinuous or pulse form by means of fluid circulation tubes (3) disposed in passages (2) provided in said structure characterised by first surrounding each tube (3) with a layer of flexible carbon-base material (4) and then inserting each tube into the passages (2), and subjecting the tubes (3) to an expansion operation under pressure so as to provide for compression of the flexible material between the tube (3) and the passages (2) to a level which is at least equal to 10 kpa and so as to provide a thermal contact with a transfer coefficient of at least equal to $10^4$ $W.m^{-2}.$ $K^{-1}$.

16. A process for cooling a structure which is subjected to an intense heat flux in continuous, discontinuous or pulse form by means of fluid circulation tubes, said structure being formed by a plurality of discrete elements (8) characterised by forming in each element of the structure at least one semicircular passage (9), disposing each element on at least one cooling tube (2) with the interposition of a layer of flexible carbon-base material (4), and securing the elements (8) and the tubes (3) together so as to apply to the flexible material a level of compression which is at least equal to 10 kPa and so as to provide a thermal contact with a transfer coefficient of at least equal to $10^4$ $W.m^{-2}K^{-1}$.

17. A process according to claim 15 or claim 16 characterised in that the flexible carbon-base material (4) is expanded graphite.

18. A process according to claim 15 or claim 16 characterised in that the flexible carbon-base material (4) is expanded graphite filled with a metal powder.

19. A process according to claim 15 or claim 16 characterised in that the flexible carbon-base material (4) is formed by a fibrous carbonaceous material selected from cloths and felts of carbon or graphite fibres with or without a metal powder filler.

20. Use of the apparatus and the process according to any one of claims 10 to 19 for cooling the first wall of a thermonuclear fusion reactor, for example of the toric type.

FIG.1

FIG.3

FIG.2

FIG.4

FIG.5